(19)

Europäisches
Patentamt

European
Patent Office

Office européen
des brevets

(11) **EP 3 136 255 A1**

(12) # EUROPEAN PATENT APPLICATION
published in accordance with Art. 153(4) EPC

(43) Date of publication:
**01.03.2017 Bulletin 2017/09**

(21) Application number: **15782634.8**

(22) Date of filing: **24.04.2015**

(51) Int Cl.:
***G06F 17/14*** *(2006.01)*

(86) International application number:
**PCT/ES2015/070348**

(87) International publication number:
**WO 2015/162331 (29.10.2015 Gazette 2015/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **24.04.2014 ES 201430606**

(71) Applicants:
• **ALSTOM Transport Technologies
92300 Levallois-Perret (FR)**
• **Danobat, S. Coop.
20870 Elgoibar Guipuzcoa (ES)**
• **SKF Española, S.A.
31500 Tudela (Navarra) (ES)**

• **Universidad Carlos III de Madrid
28918 Leganés (ES)**

(72) Inventors:
• **GARCÍA PRADA, Juan, Carlos
28911 Leganés (Madrid) (ES)**
• **CASTEJÓN SISAMÓN, Cristina
28911 Leganés (Madrid) (ES)**
• **GÓMEZ GARCÍA, María, Jesús
28911 Leganés (Madrid) (ES)**
• **MENESES ALONSO, Jesús
28911 Leganés (Madrid) (ES)**

(74) Representative: **Herrero & Asociados, S.L.
Alcalá 35
28014 Madrid (ES)**

(54) **METHOD AND SYSTEM FOR AUTOMATICALLY DETECTING DEFECTS ON A ROTATING SHAFT**

(57) The present invention relates to a method and system for automatically detecting faults in a rotating shaft. The invention comprises the steps of: acquiring a vibration signal from the rotating shaft by means of at least one sensor; processing the signal acquired by the sensor in the time domain and in the frequency domain by means of a processor, obtaining energy measurements of the acquired signal as a result of said processing; comparing in the processor the energy measurements with previously established energy patterns; and finally determining if there is any fault in the rotating shaft based on the comparison between the energy measurements and the previously established patterns.

**EP 3 136 255 A1**

**Description**

Object of the Invention

The present invention applies to the field of defectology and damage prevention, more specifically in the automatic detection of faults in rotating shafts, such as a railroad car axle, to diagnose the condition of said shafts and assure maintenance thereof.

Background of the Invention

Methods for diagnosing and monitoring the condition of mechanical systems today are of enormous interest in industry. Predictive maintenance is fundamental to prevent fractures in rotating machines, and one of the most widely used diagnostic methods is vibration analysis, because useful patterns for defecting machinery defects can be extracted from acoustic and vibration signals.

Detecting defects in rotating mechanical elements is critical for the maintenance of said elements, and due to the fact that gears and bearings are the most widely used components in industrial applications, these monitoring techniques have been amply developed for these elements. Today, however, applied maintenance techniques are very different depending on the sector, and for mechanical elements such as railroad car axles, mainly ultrasonic non-destructive inspection techniques of a different type are currently used. In this case fixed intervals are established for performing inspections which, when being performed, make it necessary to leave the machine out of service during the process, wheels even being removed, with the expenses this entails. Ultrasounds furthermore have the drawback of not offering very high probabilities of success in the areas comprising changes in section (which are precisely those which have the highest probability of having a crack), and in the case of magnetic particles (another common technique), the low automation level of inspection equipment means that the technique is susceptible to human error.

In contrast, condition monitoring-based techniques have the advantages of eliminating the need to stop and dismantle the machine to check the condition of its elements, and furthermore the probability of detecting a fault before it becomes severe increases, thereby avoiding losses and increasing process safety. These two reasons have turned condition monitoring in industrial processes into the object of a number of research projects in recent decades.

Specifically referring to shaft monitoring, since the 1960s many studies have been conducted on the dynamic behavior of shafts using both defective and healthy shafts. However, such studies do not usually include the inverse process of defect identification. With respect to the problem of detecting defects in shafts, the diagnostic methods existing in the state of the art can be classified as vibration-based methods, modal analysis-based methods, and non-conventional techniques.

With respect to non-conventional methods, methods using intelligent classification systems, such as neural networks and fuzzy logic, in addition to sophisticated signal processing techniques, such as wavelet transform (WT), for example, are included in this field. In fact, wavelet transform (WT) is the tool that is most extensively used for signal treatment. Use thereof is replacing use of FFT because it is able to eliminate the limitations of this conventional technique by including information about the time domain. As a result, WT is a very suitable tool for working with non-stationary signals, making it particularly indicated for defectology in machines because when a fissure occurs in an element, transient effects that cannot be detected taking into account only the frequency domain are generated in the signal. Therefore, wavelet transform has become much more important in recent years both for defectology of shafts and other important mechanical elements such as bearings, gears, and including structural elements.

One of the latest progresses made in WT is the so-called wavelet packet transform (WPT), which has a large number of applications. This technique allows decomposition of all the frequency bands of the signal, which allows finding differences between healthy and defective elements, which furthermore allows increasing or reducing the resolution used to study the information. The coefficients obtained from WPT can be used directly as patterns for defect detection because they are very sensitive to faults, but there are a number of alternatives for applying this technique and using other types of information relating to the coefficients, such as statistical parameters of the signal or energy measurements.

The state of the art for diagnosing defects in machines is provided with different types of artificial classifiers. It has progressed from initial classical (deterministic and probabilistic) statistical approaches to decision making, syntactic approaches or decision trees, to other approaches that have recently been developed through software packages and are derived from earlier ones, such as fuzzy group theoretical approaches, genetic and connectionist algorithms (ANNs: artificial neural networks); including hybrid versions of all the aforementioned. Today, ANNs have become an intelligent classification system of enormous interest for industry.

Artificial neural networks are an example of automatic learning and processing inspired by how the nervous system in animals works. It is a system of interconnected neurons in a network that collaborates in producing an output stimulus. They are commonly referred to as neural networks in the field of artificial intelligence. The fundamental parts of a basic neural unit are:

- input: the vector ($p_j$) that excites the neuron. It consists of the most representative data (patterns) of the phenomenon to which an ANN is to be applied.
- weights: values ($w_j$) associated with each of the connections between neurons in a network. The variation of such weights determines the learning process.
- activation function: responsible for calculating the level or state of activation of the neuron according to the total input. It is perhaps the main characteristic of neurons which best defines the behaviour thereof. The most popular activation functions in different ANN architectures are: the sigmoid function to obtain values in interval [0,1], and the hyperbolic tangent function to obtain values in the interval [-1,1].
- network or propagation function: calculates the baseline value or total input to the neural unit. It is equivalent to the combination of signals that excite or inhibit biological neurons. The most widely used network functions are the linear function and the second-order function. The equation for obtaining the output of the neural unit for a linear network function is:

$$a = f\left(\sum_{j=1}^{n} w_j\, p_j + u_j\right)$$

- output: the output value of the neuron according to the activation thereof. In the case of using an ANN for the fault diagnostic process, the output is equivalent to the network diagnosis.

Neurons are organized in layers, where they are connected through weights. Basic ANNs have at least three layers of neurons: an input layer, one or more hidden layers, and an output layer. Each layer of the ANN contains a group of processing units called nodes or neurons that send their own output to all the nodes of the next layer in a unidirectional manner.

There are two phases in using a conventional ANN: the learning or training phase and the testing and/or use phase. In the case of an ANN with supervised learning, training consists of presenting a varied set of input patterns, the output of which is known. The network adjusts connections between layers (weights $w_j$) in an iterative error minimization process, until getting said network to comply with the established requirements. There are different algorithms for adjusting weights that make up different network configurations.

According to the foregoing, inventions known up until now through the state of the art perform the function of the object of the invention, but in a rather unreliable and inefficient manner because they do not adapt in the most optimal manner to being applied to rotating shafts such as railroad car axles. The state of the art therefore requires developing these techniques to allow performing a reliable and automatic diagnosis of the condition of a wheel set (detecting if there are faults/defects) along with the remaining elements forming part of a rolling system, without the drawback of having to dismantle the shaft and stopping the operation thereof.

Description of the Invention

The present invention relates to a method for automatically detecting faults in a rotating shaft. The method comprises the steps of:

a) acquiring a vibration signal from the rotating shaft by means of at least one sensor;
b) processing the signal acquired by the sensor in the time domain and in the frequency domain by means of a processor, obtaining energy measurements of the acquired signal as a result of said processing;
c) comparing in the processor the energy measurements with previously established energy patterns;
d) determining if there is any fault in the rotating shaft based on the comparison between the energy measurements and the previously established patterns.

According to one embodiment of the present invention, the processing of step b) can be performed by applying a wavelet packet transform to the acquired signal. By applying the wavelet packet transform to the acquired signal, the method of the invention contemplates the possibility of choosing a decomposition level for the acquired signal and a mother wavelet.

According to one embodiment of the present invention, the energy patterns are distributed in packets corresponding to different frequency bands of the acquired signal.

Optionally, one of the embodiments of the present invention contemplates detecting changes in energy in one and the same frequency band between different signals previously obtained from the rotating shaft to establish energy patterns.

In one of the embodiments of the present invention, the comparison of the energy measurements with previously established patterns is performed by means of a neural network. Depending on the different embodiments of the invention, the neural network is selected from a unidirectional neural network, a neural network for pattern recognition, a multilayer perceptron neural network, a radial basis function neural network or a probabilistic neural network. The possibility of adding an additional neural network training step where signals the output result of which is known are used as input of the neural network is contemplated. Optionally, the method can comprise increasing the decomposition level of the acquired signal in the case of obtaining a hit rate less than a certain threshold.

One of the embodiments of the present invention contemplates the possibility that the rotating shaft is a railroad axle mounted on a railroad car, where said railroad car is in motion.

In other words, the railroad car or rolling system comprises a rotating shaft of a railroad car or a rotating element assembled together with the remaining elements normally comprised in said railroad car or rolling system.

Faults or defects detected in a rotating shaft by the method of the present invention can be classified in different levels of severity according to one of the embodiments of the invention. For example, the levels of severity can correspond to the depth of cracks or fissures detected in a railroad car axle.

A second aspect of the invention relates to a system for automatically detecting faults in a rotating shaft. The system comprises:

- a sensor configured for acquiring a vibration signal from the rotating shaft;
- a processor in communication with the sensor, configured for analyzing signals in the time domain and in the frequency domain, obtaining energy measurements of said signals, comparing the energy measurements with previously established energy patterns and determining if there is any fault in the rotating shaft according to the comparison of the energy measurements with previously established patterns.

A possible embodiment of the system of the invention contemplates the possibility that the rotating shaft is a railroad car axle.

According to a particular embodiment of the invention, the sensor used for acquiring vibration signals from the rotating shaft is an accelerometer. Said accelerometer can be installed, for example, in the grease box linked to the railroad car axle under study.

A final aspect of the invention relates to a computer program comprising program code means suitable for performing the steps of the method of the invention, when said program is run in a general purpose processor, a digital signal processor, an FPGA, an ASIC, a microprocessor, a microcontroller, or any other form of programmable hardware.

Therefore, according to the described invention, the method and system proposed by the invention is an advancement in methods for diagnosing and detecting faults in rotating shafts, primarily applied to railroad car axles, used up until now. The drawbacks described above are therefore resolved in a fully satisfactory manner by way of predicting the wear of shafts by means of detecting faults at different levels of severity without having to dismantle the shafts or leave machines out of service while they are being inspected, this inspection being done automatically with the subsequent improvement in operations associated with both operation and maintenance of the machine, and the subsequent cost reduction due to process optimization and efficiency, and all this without requiring any special operator skills and without any difficulty in use.

Description of the Drawings

To complement the description being made and for the purpose of aiding to better understand the features of the invention according to a preferred practical embodiment thereof, a set of drawings is attached as an integral part of said description in which the following has been depicted with an illustrative and non-limiting character:

Figure 1 shows a diagram of the proposed invention.

Figure 2 shows a diagram of the application of a wavelet transform.

Figure 3 shows a diagram of the decomposition of a signal as it is passed through filters of a discrete wavelet transform.

Figure 4 shows the level 3 decomposition tree in an analysis by means of wavelet packets.

Figure 5a shows the distribution of energies in different decomposition levels according to a signal of a particular example of the invention.

Figure 5b shows the distribution of energies in decomposition level 3 for the same signal used in Figure 5.

Figure 6 shows a general diagram of the steps of the proposed invention.

Figure 7a shows the energy patterns of the wavelet packets of a signal from a healthy shaft at 20 Hz.

Figure 7b shows the energy patterns of the wavelet packets of a signal from a defective shaft at 20 Hz.

Detailed Description of the Invention

In view of the mentioned drawings, it can be seen how one of the possible embodiments of the invention proposes a non-destructive method and system for detecting faults in shafts rotating at low revolutions, being fundamentally applied to the wheel set of a railroad car, including an axle. It is based on condition monitoring, and the advantage of applying the invention to railroad car axles is that such axles do not need to be dismantled for inspection.

The vibrations given off are continuously monitored and processed in the time domain and in the frequency domain, selecting optimal parameters that allow being used as input information in an intelligent classification system.

Vibration measurement-based techniques include, among others, techniques in which signals are obtained in both an experimental and analytical manner. Phenomena observed in dynamic analyses of these elements when a defect occurs, such as certain instabilities observed in critical shaft speed subharmonics and rotational speed harmonics, are sought for defect detection. However, although these effects are theoretically transparent, in practice early detection of a defect is not a simple task, and the rate of detection is often below 25%.

The present invention replaces typical optimal coefficients of MRA analysis with the use of energies calculated by means of WPT. The proposed invention is therefore based on obtaining WPT energy from vibration signals obtained during normal operation of the rotating shaft under study without having to dismantle it. Optimal patterns are chosen to be classified by means of neural networks. Currently, the present invention has been tested successfully using an RTK-01 prototype laboratory bench on a 1/5 scale.

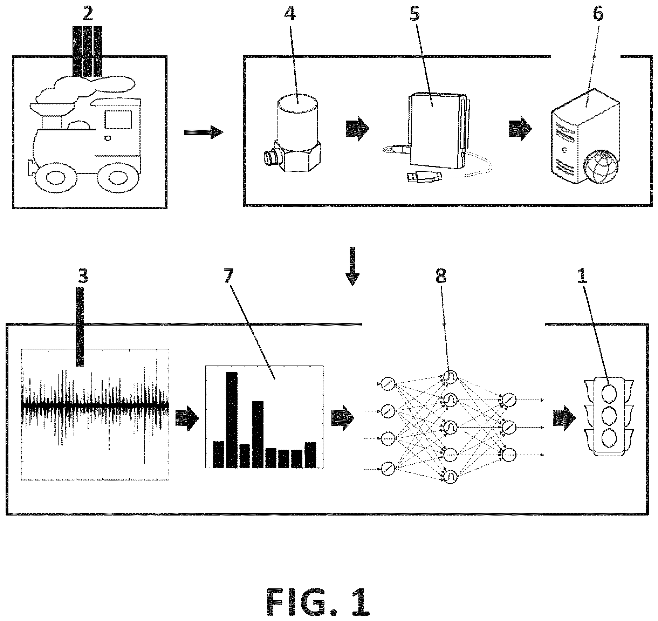

Figure 1 shows a diagram of the proposed invention showing the operation thereof. According to a particular embodiment, the proposed invention offers a constant diagnosis (1) of the condition of a rotating shaft that is part of a mechanical system under study, in this case a railroad car (2) axle, with the advantage of not having to dismantle it, because vibration signals (3) are acquired during normal operation thereof by means of a sensor (4), for example an accelerometer, which signals are collected by an acquisition system (5) and sent to a signal processor (6). After processing the signals and applying wavelet packet transform to obtain an energy measurement (7) of the signals, said signals are introduced in a neural network (8) trained with earlier samples for comparing and classifying the signals depending on the condition of the shaft. The detected faults are automatically identified with very high success rates.

To apply methods for monitoring gears and bearings to the case of railroad car axles, which are extremely critical elements, studies of several functionals have been conducted according to different embodiments of the present invention in order to determine the most optimal indicators of the presence of a defect in a shaft, such as a crack or a fissure.

The most widely studied functionals in the state of the art are, on one hand, statistical parameters (such as the mean, median, standard deviation, bias, the kurtosis, root mean square, minimum, maximum, peak-to-peak value, peak value, shape factor or crest factor), and on the other hand, representations of the signal that allow studying it in both the time domain and frequency domain.

With respect to frequency domain representations, they have been conventionally used to examine frequency peaks in which amplitude is modified or which are displaced due to the presence of a defect. This is because the presence of a crack in a structural element reduces rigidity thereof, so natural frequencies are reduced and vibration modes change. The study of natural frequencies has always been the first step in finding indicators of damage in a mechanical element because it can be measured in a rapid and easy manner and it experiences very little contamination due to experimental noise. Differences in energy in certain bands indicating the presence of a defect are detected by conducting thorough analysis by frequency bands, but the main drawback of this technique is that when a defect occurs, the changes in natural frequencies are very minor and can be covered up due to experimental errors.

In the present invention, however, vibration modes are not observed, but rather response signals occurring during normal motion of the machine associated with the rotating shaft are, so the noise drawback will be included.

With respect to the functionals describing a signal in the time domain and frequency domain, wavelet transform stands out and it has been chosen for the present invention. Such transforms are a very suitable mathematical tool for detecting defects in mechanical elements. One of its greatest advantages is that it allows working in multiresolution mode, which allows efficiently locating local phenomena in non-stationary signals with rapid transients. Just as frequency coefficients of sinusoidal signal components are obtained with Fourier transform, correlation coefficients between the signal and a function referred to as mother wavelet are obtained with wavelet transform. Said correlation coefficients furthermore depend on the scale and position of the mother wavelet. The mother wavelet is chosen due to its morphology, as it more greatly resembles the effects produced in signals with the presence of a defect.

In the experiments conducted for the present invention, a mother wavelet set is selected in one of the embodiments to evaluate which has the highest correlation with the evaluated defects. It is determined that the Daubechies wavelet family, and particularly the Daubechies wavelet 6, is the one having the best fit.

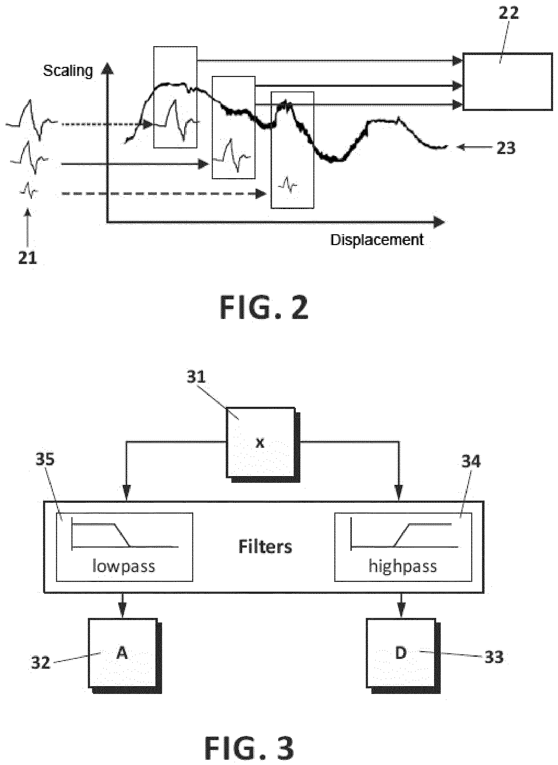

Continuous wavelet transform (CWT) is a linear operator that associates each finite energy signal with a particular function, referred to as mother wavelet (21), suitably chosen according to the signal. Once the instant and the observation scale are selected, the CWT allows analyzing structures of the signal through correlation coefficients (22), instead of analyzing the signal (23) as a whole, as seen in Figure 2.

The advantage of the continuous wavelet transform is that it is a very useful tool for detecting, characterizing and classifying signals with complex spectral characteristics, transient contents and other properties related to non-stationary signals.

The mathematical formulation of continuous wavelet transform is as follows:

$$T(a,b) = w(a) \int_{-\infty}^{\infty} X(t)\, \psi^*\left(\frac{t-b}{a}\right) \mathrm{dt} \qquad \text{(Eq. 1)}$$

Where $X(t)$ is the transient signal and $\psi$ is a mother wavelet function. $w(a)$ is a weight function. In equation 1, $b$ is related to positioning and $a$ is related to the scale. The weight function is used for energy conservation purposes (assuring that wavelets will have the same energy in each scale). $T(a, b)$ are the wavelet coefficients that depend on each scale $a$ and on displacement $b$. The product of the wavelet conjugated with the signal is integrated throughout the entire range of the signal, which is mathematically known as convolution.

Based on the definition of continuous wavelet transform, working with discrete wavelet transforms is common practice. This is due to their computational efficacy and to the fact that discrete data signals are usually used. The most common aspect of making CWT discrete is using the dyadic grid, where a = 2i. In this case, the transform is determined by:

$$T(2^i, b) = \frac{1}{2^i} \int_{-\infty}^{\infty} X(t)\, \psi^*\left(\frac{t-b}{2^i}\right) \mathrm{dt} \qquad \text{(Eq. 2)}$$

Each i is referred to as octave and consists of each of the levels in which the signal is decomposed. Low scales take into account low frequencies, and high scales take into account higher frequencies. When orthonormal wavelets are used, a method referred to as the decimation method is commonly used. This method consists of decomposing the signal into a number of coefficients that is proportional to the analyzed scale. This means that the signal will have a different number of coefficients on each scale. Physically speaking, it reflects the fact that lower frequencies of a signal need fewer coefficients in order to be represented.

Both multiresolution analysis (MRA) and wavelet packet transform (WPT) analysis are an extension of the discrete wavelet transform, where a discrete signal $X$ is processed at different frequency bands and with different resolutions, when the signal is decomposed into approximation information (32) and detail information (33) with high-pass recursive filters (34) and low-pass recursive filters (35), as seen in Figure 3.

The approximation contains information about the high-scale and low-frequency components, whereas the details contain low-scale and high-frequency information.

The main difference between MRA methods and analysis by means of WPT is fundamentally that in MRA analysis, only approximation parameters are decomposed, losing detail information and information about approximation details, whereas in analysis by means of WPT, both detail and approximation are decomposed in each of the levels.

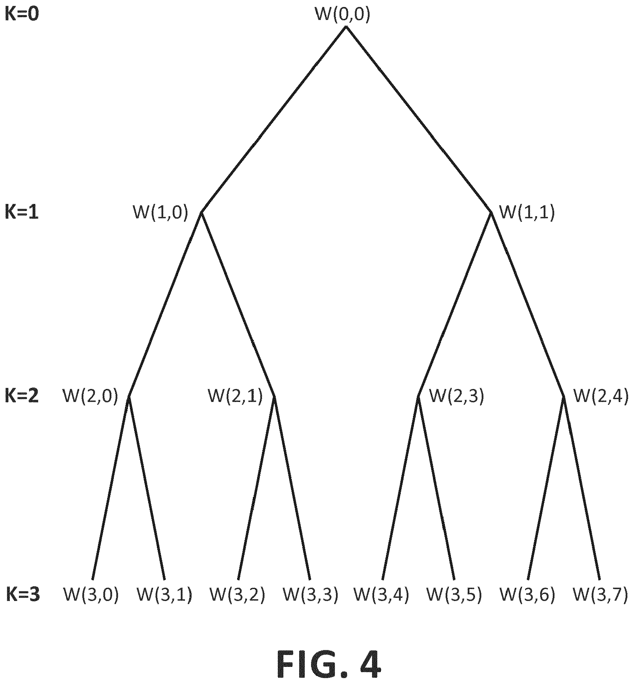

Figure 4 shows the level 3 decomposition tree of a signal by means of WPT analysis, in which all decompositions of both approximation and detail are taken into account. In said drawing, decomposition coefficient vectors are denoted as node positions in the form of W(k,j), where k indicates the decomposition level (in this case, k=0,1,2,3) and j indicates the position of the node within its decomposition level. Node W(0,0) represents the original signal.

In this case, the decomposition algorithm is identical to the multiresolution analysis, except in this case both the approximation and detail coefficients are decomposed. Therefore, if each correlation coefficient vector, W(k,j), is in the following form:

$$W(k,j) = \{w_1(k,j), \ldots, w_N(k,j)\} = \{w_i(k,j)\} \qquad \text{(Eq. 3)}$$

signal recomposition in this case must take into account the eight coefficient vectors (packets), W(3,j) corresponding to level 3, according to the following equation:

$$W(0,0) = \sum_{j=0}^{7} |w_i(k,j)|^2 \qquad \text{(Eq. 4)}$$

The concept of energy used in the wavelet packet analysis is closely linked to the known notions derived from Fourier theory. Wavelet packet energy is obtained from the sum of the squares of the coefficients of each packet:

$$E_{k,j} = \sum_i |w_i(k,j)|^2 \qquad \text{(Eq. 5)}$$

To obtain the relative energy, total energy of the signal before the decomposition wavelet is calculated:

$$E_{total} = \sum_j E_{k,j} \qquad \text{(Eq. 6)}$$

Finally, the relative energy of each wavelet packet j in decomposition level k is defined by:

$$e_{k,j} = \frac{E_{k,j}}{E_{total}} \text{ where } \sum_j e_{k,j} = 1 \qquad \text{(Eq. 7)}$$

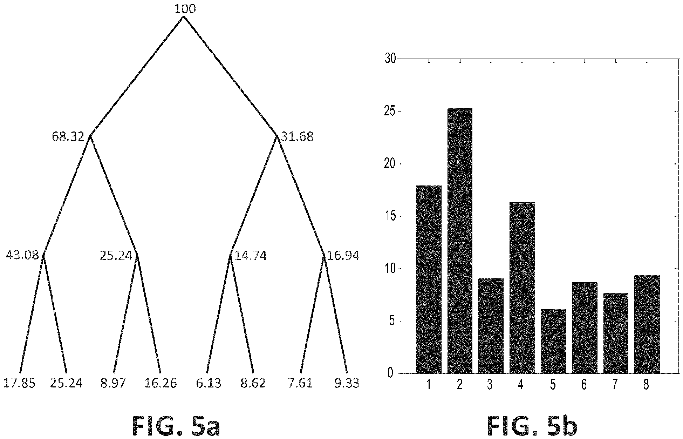

Figure 5 shows in percentages the distribution of the energy of an exemplary signal in the different decomposition levels (Figure 5a), and in level 3 specifically (Figure 5b), obtained by means of WPT analysis.

According to different tests of the present invention, the signals are obtained from railroad car axles on a 1/8 scale, tested in a test bench called ROTOKIT. The studied signals, obtained with accelerometers, are from both healthy shafts and from shafts with several defect levels (for example 16%, 33% and 50% of the diameter), and at different test speeds (20 Hz, 40 Hz and 60 Hz). The first approximation is taken into account as the optimal functional for the wavelet packet energy classification system because it has been determined that it is the most relevant for studying defects in mechanical elements and it allows reducing the number of pieces of data to be entered in the classification system without losing relevant information.

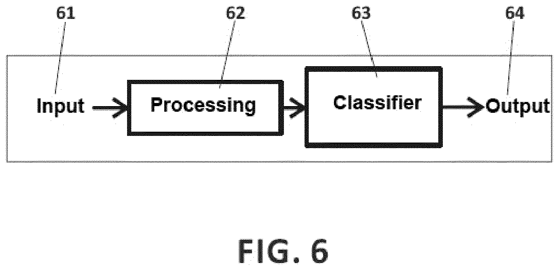

Figure 6 depicts a complete diagram of the method proposed by the present invention. It shows the following steps:

- Input (61): corresponding to the acquisition of information from the system to be monitored (for example, the Rotokit system or real system is used). A vibration signal is acquired by means of a sensor, or more specifically an accelerometer.
- Processing the signal (62): relevant information about the condition of the shaft is extracted. Signal filtering and conditioning will be performed in this step, and the energy patterns will be extracted from the acquired signal.
- Classifier system (63): this involves selecting the most promising system as well as the most suitable configuration.

System output (64) generates a diagnosis that corresponds to the actual operating condition of the shaft. Conditions of healthy shafts/defective shafts are used in the first approximation, and as more information is obtained at the input by means of system training, discrimination of fault conditions is performed going from minor to serious, according to the different previously established levels of severity.

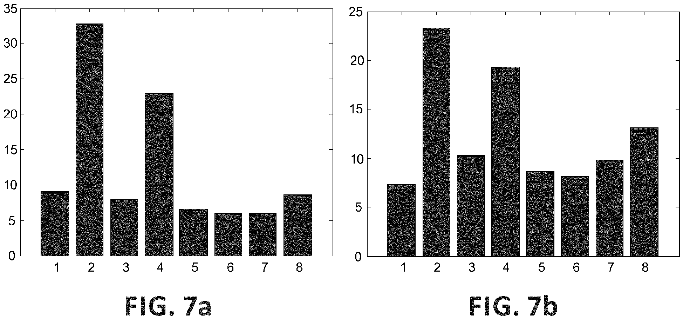

As previously explained, the optimal functional chosen to perform comparisons and/or classifications is the wavelet packet energy. Visually, it is very easy to compare differences between energy patterns, as shown in Figures 7a and 7b. Said drawings correspond to mean packet energy values, which are the result of processing the signals obtained in two experiments with the system rotating at 20 Hz with a healthy shaft and a shaft with a defect depth of less than 33% the radius. With respect to wavelet decomposition, level 3 decomposition has been performed with Daubechies mother wavelet 6. In this example it can be seen that in the case of a shaft without a defect, the energy of the signal is fundamentally concentrated on packets 2 and 4. As a defect occurs in the shaft, said energy is distributed among the remaining packets.

For the tasks of classification and comparison with patterns, the present invention uses artificial neural network (ANN) architecture. Different tests from among all the possibilities have been performed to see which is the most suitable for the particular case of fault detection in shafts by means of running different tests.

According to one embodiment of the invention, the energy of the wavelet packets obtained from a Daubechies mother wavelet 6 and having a decomposition level equal to 3 have been used as patterns in test cases. In other words, eight energy levels corresponding to the eight packets ($2^3$) are presented to the neural network as input, as depicted in Figure 7.

Tests have been conducted with two types of multilayer ANNs integrated in the easy-to-apply MATLAB™ toolbox, which will allow studying the applicability of such classification system to the particular case of railroad car axles. These are the FeedForward type network and pattern recognition network:

- FeedForward ANN (unidirectional) is a multilayer neural network with sigmoid-type activation functions in its hidden layer. It is called FeedForward because the information is propagated forward and there is no type of feedback. This neural network is trained with the eight energy values of the wavelet packets from the signals obtained with the system (patterns). In the specific examples shown below, 1000 signals, corresponding to healthy shafts and defective shafts (16% fissure depth with respect to shaft diameter) were used. 75% of said signals were used for training the network and the remaining 25% (400 pattern vectors of dimension 8) were presented to the already trained network as a validation system. In this network configuration, 8 neurons were used in the input layer (corresponding to the dimension of the pattern vector), 5 neurons were used in the hidden layer and one neuron was used in the output layer corresponding to the result of the classification. In this first approximation the following response was chosen: 0 for a healthy shaft and 1 for a defective shaft.

  Error convergence can be seen in the experimental results. In 26 iterations, the algorithm converges to the established value; however, the best prior validation value is achieved in iteration 20 with an error of 0.0158. In contrast, once the network has already been trained, when it is presented with new patterns to be classified, a success rate of 84.25% is obtained. Furthermore, the presented algorithm has a success rate of 100% when it is presented with a defective shaft.

- **Pattern recognition ANN:** Such network has the same architecture as the previous network, the difference being in the type of activation function used, the training algorithm and the possibility offered by the MATLAB™ tool to customize the network itself. In the same training and validation conditions (the same signals used), the obtained results are a classification success rate of 79.5%.

The good results obtained with the training of the two simple ANN configurations described above make applying the same concepts to other more complex and flexible networks that are widely applied in the field of classification, such as multilayer perceptron (MLP) networks, radial basis function (RBF) networks and probabilistic neural networks (PNN), an evident step.

## Claims

1.  Method for automatically detecting faults in a rotating shaft during normal operation, the method being **characterized in that** it comprises the steps of:

    a) acquiring a vibration signal from the rotating shaft by means of at least one sensor, wherein said vibration signal is naturally produced by normal operation of the rotating shaft;
    b) processing the signal acquired by the sensor in the time domain and in the frequency domain by means of a processor, obtaining energy measurements of the acquired signal as a result of said processing;
    c) comparing in the processor the energy measurements with previously established energy patterns;
    d) determining if there is any fault in the rotating shaft based on the comparison between the energy measurements and the previously established patterns.

2.  Method according to claim 1, where the processing of step b) comprises applying a wavelet packet transform to the acquired signal.

3.  Method according to claim 2, where applying the wavelet transform to the acquired signal further comprises choosing a decomposition level for the acquired signal and a mother wavelet.

4.  Method according to any of the preceding claims, where the energy patterns are distributed in packets corresponding to different frequency bands of the acquired signal.

5.  Method according to any of the preceding claims, where it further comprises detecting changes in energy in one and the same frequency band between different signals previously obtained from the rotating shaft to establish energy patterns.

6.  Method according to any of the preceding claims, where the comparison of the energy measurements with previously established patterns is performed by means of a neural network.

7.  Method according to claim 6, where the neural network is selected from a unidirectional neural network, a neural network for pattern recognition, a multilayer perceptron neural network, a radial basis function neural network or a probabilistic neural network.

8.  Method according to claim 7, further comprising a neural network training step where signals the output result of which is known are used as input of the neural network.

9.  Method according to claim 8, where during the training step the method further comprises increasing the decomposition level of the acquired signal in the case of obtaining a success rate less than a certain threshold.

10. Method according to any of the preceding claims, where the rotating shaft is a railroad car axle mounted on a railroad car, where said railroad car is in motion.

11. Method according to any of the preceding claims, which further comprises classifying faults detected in the rotating shaft in different levels of severity.

12. System for automatically detecting faults in a rotating shaft during normal operation, the system being **characterized in that** it comprises:

    - a sensor configured for acquiring a vibration signal from the rotating shaft, wherein said vibration signal is naturally produced by normal operation of the rotating shaft;
    - a processor in communication with the sensor, configured for analyzing signals in the time domain and in the frequency domain, obtaining energy measurements of said signals, comparing the energy measurements with previously established energy patterns and determining if there is any fault in the rotating shaft according to the comparison of the energy measurements with previously established patterns.

13. System according to claim 12, where the sensor is an accelerometer.

14. System according to any of claims 13 or 14, where the rotating shaft is a railroad car axle.

15. Computer program comprising program code means suitable for performing the steps of the method according to any of claims 1-11, when said program is run in a general purpose processor, a digital signal processor, an FPGA, an ASIC, a microprocessor, a microcontroller, or any other form of programmable hardware.

**FIG. 1**

FIG. 2

FIG. 3

**FIG. 4**

FIG. 5a

FIG. 5b

61        62        63        64

Input → Processing → Classifier → Output

FIG. 6

FIG. 7a

FIG. 7b

# INTERNATIONAL SEARCH REPORT

International application No.

PCT/ES2015/070348

**A. CLASSIFICATION OF SUBJECT MATTER**

*G06F17/14* (2006.01)

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

EPODOC, INVENES, WPI

**C. DOCUMENTS CONSIDERED TO BE RELEVANT**

| Category* | Citation of document, with indication, where appropriate, of the relevant passages | Relevant to claim No. |
|---|---|---|
| X | US 6382029 B1 (SHOURESHI RAHMAT A ET AL.) 07/05/2002, Abstract; Description: column 8, lines 16-25. | 1-15 |
| A | US 2011023610 A1 (UME IFEANYI CHARLES ET AL.) 03/02/2011, the whole document | 1-15 |
| A | US 2005061076 A1 (KIM HYEUNG-YUN) 24/03/2005, the whole document | 1-15 |
| A | US 2002194159 A1 (KAMATH CHANDRIKA ET AL.) 19/12/2002, the whole document | 1-15 |
| A | US 6857553 B1 (HARTMAN DANIEL A ET AL.) 22/02/2005, the whole document | 1-15 |

☒ Further documents are listed in the continuation of Box C.  ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance. | | |
| "E" earlier document but published on or after the international filing date | | |
| "L" document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" document published prior to the international filing date but later than the priority date claimed | "&" | document member of the same patent family |

| Date of the actual completion of the international search | Date of mailing of the international search report |
|---|---|
| 09/07/2015 | **(09/07/2015)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | M. Muñoz Sanchez Telephone No. 91 3495349 |

Form PCT/ISA/210 (second sheet) (July 2009)

## INTERNATIONAL SEARCH REPORT

| International application No. |
| --- |
| PCT/ES2015/070348 |

**C (continuation).** DOCUMENTS CONSIDERED TO BE RELEVANT

| Category * | Citation of documents, with indication, where appropriate, of the relevant passages | Relevant to claim No. |
| --- | --- | --- |
| A | US 2006069520 A1 (GORINEVSKY DIMITRY ET AL.) 30/03/2006, the whole document | 1-15 |
| A | US 2004022436 A1 (PATTI PAUL ET AL.) 05/02/2004, the whole document | 1-15 |

Form PCT/ISA/210 (continuation of second sheet) (July 2009)

## INTERNATIONAL SEARCH REPORT

Information on patent family members

| International application No. |
| --- |
| PCT/ES2015/070348 |

| Patent document cited in the search report | Publication date | Patent family member(s) | Publication date |
| --- | --- | --- | --- |
| US6382029 B1 | 07.05.2002 | NONE | |
| US2011023610 A1 | 03.02.2011 | JP2011033627 A | 17.02.2011 |
| | | JP5587700B B2 | 10.09.2014 |
| | | US8146429 B2 | 03.04.2012 |
| US2005061076 A1 | 24.03.2005 | US2009157358 A1 | 18.06.2009 |
| | | CN101365928 A | 11.02.2009 |
| | | WO2005031502 A2 | 07.04.2005 |
| | | WO2005031502 A3 | 29.03.2007 |
| | | WO2005031501 A2 | 07.04.2005 |
| | | WO2005031501 A3 | 12.09.2008 |
| | | US2005075846 A1 | 07.04.2005 |
| | | US7286964 B2 | 23.10.2007 |
| | | US7117742 B2 | 10.10.2006 |
| | | US2008225376 A1 | 18.09.2008 |
| | | US7729035 B2 | 01.06.2010 |
| | | US2007266788 A1 | 22.11.2007 |
| | | US7536911 B2 | 26.05.2009 |
| | | US2007261493 A1 | 15.11.2007 |
| | | US7536912 B2 | 26.05.2009 |
| | | US2008011086 A1 | 17.01.2008 |
| | | US2007260425 A1 | 08.11.2007 |
| | | US2007260427 A1 | 08.11.2007 |
| | | US7590510 B2 | 15.09.2009 |
| | | US2007265806 A1 | 15.11.2007 |
| | | US7584075 B2 | 01.09.2009 |
| | | US2007265808 A1 | 15.11.2007 |
| | | US7596470 B2 | 29.09.2009 |
| | | US2006287842 A1 | 21.12.2006 |
| | | US7668665 B2 | 23.02.2010 |
| | | US2007012112 A1 | 18.01.2007 |
| | | US7322244 B2 | 29.01.2008 |
| | | US2007012111 A1 | 18.01.2007 |
| | | US7325456 B2 | 05.02.2008 |
| | | US2007006653 A1 | 11.01.2007 |
| | | US7246521 B2 | 24.07.2007 |
| | | US2006260402 A1 | 23.11.2006 |
| | | US7197931 B2 | 03.04.2007 |
| | | US2006268263 A1 | 30.11.2006 |
| | | US7281428 B2 | 16.10.2007 |
| | | US2006179949 A1 | 17.08.2006 |
| | | US2008148853 A1 | 26.06.2008 |
| | | KR20060040571 A | 10.05.2006 |
| | | KR100623634B B1 | 13.09.2006 |
| | | KR20050070088 A | 05.07.2005 |
| | | KR100784072B B1 | 10.12.2007 |
| | | JP2007511741 A | 10.05.2007 |
| | | JP2007521490 A | 02.08.2007 |
| | | EP1685457 A2 | 02.08.2006 |
| | | CN101014938 A | 08.08.2007 |

Form PCT/ISA/210 (patent family annex) (July 2009)

## INTERNATIONAL SEARCH REPORT

Information on patent family members

International application No.

PCT/ES2015/070348

| Patent document cited in the search report | Publication date | Patent family member(s) | Publication date |
|---|---|---|---|
|  |  | AU2004277167 A1 | 07.04.2005 |
|  |  | AU2004277166 A1 | 07.04.2005 |
|  |  | EP1685456 A2 | 02.08.2006 |
| US2002194159 A1 | 19.12.2002 | US6675164 B2 | 06.01.2004 |
| US6857553 B1 | 22.02.2005 | NONE |  |
| US2006069520 A1 | 30.03.2006 | WO2006036895 A2 | 06.04.2006 |
|  |  | WO2006036895 A3 | 06.07.2006 |
|  |  | US7103507 B2 | 05.09.2006 |
|  |  | US2006259217 A1 | 16.11.2006 |
|  |  | US7379845 B2 | 27.05.2008 |
| US2004022436 A1 | 05.02.2004 | AU6967901 A | 24.09.2001 |

Form PCT/ISA/210 (patent family annex) (July 2009)